# EUROPÄISCHE PATENTSCHRIFT

(11) **EP 2 080 739 B1**
(45) Veröffentlichungstag und Bekanntmachung des Hinweises auf die Patenterteilung: **06.07.2011**
(21) Anmeldenummer: 07019474.1
(22) Anmeldetag: 04.10.2007
(51) Int. Cl.: C02F 1/76, C02F 1/50, C02F 103/02, C02F 103/28

(54) **Methode zur Verhinderung des Wachstums von lebenden Organismen in Süsswasserkreisläufen mit hohem Chlorbedarf**
Method for inhibiting the growth of living organisms in freshwater cycles with high chlorine requirements
Méthode destinée à éviter la croissance d'organismes vivants dans des circuits d'eau douce à teneur élevée en chlore

(43) Veröffentlichungstag der Anmeldung: 22.07.2009
(73) Patentinhaber: Pohlen, Alfred, 8315 Olm (LU); Kern, Gerhard, 7201 Neudörfl (AT)
(72) Erfinder: Pohlen, Alfred, 8315 Olm (LU); Kern, Gerhard, 7201 Neudörfl (AT); Spedding, Jeffrey, 5400 Hallein (AT)
(74) Vertreter: Kador & Partner

(56) Entgegenhaltungen:
- EP-A- 1 391 430
- DE-T2- 69 233 662
- US-A1- 2003 121 868
- US-B1- 6 303 038
- US-B1- 6 478 973

## Beschreibung

Ein bekanntes Problem bei industriell verwendeten Wasserkreisläufen ist das Auftreten von biologischem Bewuchs. Man spricht in diesem Zusammenhang auch von mikrobiellem Wachstum oder biologischem Fouling. Dieses biologische Fouling wird durch die im Wasser vorhandenen lebenden Organismen, wie z.B. Algen, Pilzen, Bakterien und anderen einfachen Lebensformen, verursacht. Das Ausmaß des Wachstums sowie die Art der lebenden Organismen, die diesen Bewuchs verursachen, hängt von der Herkunft des Wassers (der Wasserquelle, Süß-/Salzwasser) und anderen Faktoren wie z.B. Temperatur, der pH-Wert des Wassers, der Gehalt an organischen und anorganischen Nährstoffen, die entweder aus der Luft in das System hineingezogen werden oder aus den Materialien, die natürlicherweise im Wasser vorkommen oder während der Lebensdauer der Pflanzen kontinuierlich zugeführt werden, den aerobe/anaerobe Bedingungen, der Anwesenheit/Abwesenheit von Sonnenlicht etc. ab.

Neben dem Bewuchs von Leitungen im System, ist vor allem die Schleimbildung durch sogenannte schleimbildende Bakterien ein großes Problem. Es kann dadurch zur Verstopfung von Rohrleitungen und Filtern, zur Beschleunigung der Korrosion, zu einer Abnahme des Wärmeübergangs etc. kommen, was zu erheblichen Kosten- und Zeiteinbußen in den Produktionsabläufen führt.

Zirkulierende Süßwasserkreisläufe werden in vielen verschiedenen industriellen Anlagen benötigt, so z.B. in Kühlwassertürmen, in Swimmingpools, in der Lebensmittelindustrie, aber auch in Papiermaschinen.

Gerade bei der Papierherstellung bzw. in den dafür benötigten Süßwasserkreislauf-Systemen sind die Bedingungen sehr speziell und ideal für das biologische Fouling. Dies liegt vor allem an der Temperatur, dem pH-Wert und der stofflichen Zusammensetzung des Wassers im Kreislauf.

Bei der Herstellung von Papier werden Fasern in Auflöseaggregaten, den so genannten Pulpern, in Wasser dispergiert, so dass der so genannte Papierstoff entsteht. Dieser Papierstoff wird dann in weiteren Bearbeitungsschritten gesäubert bzw. mechanisch behandelt. Je nach Papiersorte werden weitere Bestandteile zugegeben, wie zum Beispiel Füllstoffe etc.

Im Zuge dieser Behandlung des Papierbreis kann es, je nach Zielsetzung, zu Verdünnungs- oder Eindickungsschritten kommen, was eine Vielzahl von mehr oder weniger CSB- und feststoffbelasteten Kreisläufen bedingt.

Der fertige Papierbrei wird dann über einen so genannten Stoffauflauf homogen auf ein Endlossieb aufgebracht und hier entwässert. Das so entstandene Faservlies wird anschließend durch die so genannten Pressenpartien geführt, wo mittels so genannten Pressfilzen und Druck weiteres Wasser aus dem Faservlies gepresst werden. Schließlich gelangt das so geformte Papierblatt in die so genannte Trockenpartie, wo durch Kontakt mit heißen Metallzylindern der Rest des noch enthaltenen Wassers verdampft wird.

Der Weg des Faserbreis vom Pulper bis zur Papiermaschine, sowie die so genannte Nasspartie der Papiermaschine selbst, bestehend aus Sieb- und Pressenpartie, ist durch zahlreiche teilweise geschlossene und teilweise offene Wasserkreisläufe gekennzeichnet. In diesen Wasserkreisläufen kommt es regelmäßig zum biologischen Fouling und es entstehen vor allem die oben beschriebenen biologischen Schleime. Dabei handelt es sich um spezielle Arten von Bakterien, welche so genannte EPS (extrazelluläre polymere Substanzen) bilden. Diese Schleime wachsen in diesen Kreisläufen auf Oberflächen und können sich von Zeit zu Zeit lösen. Je nachdem wo dies geschieht, kann dies fatale Auswirkungen in Bezug auf Produktivität und/oder Qualität des fertigen Papiers haben. Löst sich z. B. ein Schleimzapfen in einem Stoffauflauf, so hat dies entweder eine Produktionsunterbrechung durch Abriss oder aber einen Schmutzfleck im fertigen Papier zur Folge. Beides führt zu nicht unerheblichen Kosten durch Produktionsausfall oder Zusatzaufwand zwecks Nachbesserung.

Um diese Probleme zu lösen, wurden bereits verschiedene Methoden entwickelt. Dabei unterscheidet man zwischen den so genannten Biozid-Methoden und biozidfreien Methoden.

Die biozidfreien Methoden vermeiden die Zugabe von keimabtötenden Substanzen und arbeiten, je nach Methode, mit einem biologischen Gleichgewicht zwischen Schleimbildern und Nicht-Schleimbildern und/oder mit einer Konditionierung der Kreislaufoberflächen, sodass hierauf kein Schleim haften bleibt und/oder mit so genannten Biodispergatoren, die den Schleim dispergieren sollen. Diese Methoden arbeiten mehrheitlich mit einem verbleibenden Biofilm auf den Systemelementen, jedoch ist dieser derart dispergierbar (lebende Materie), dass er bei Loslösung durch die hohen Turbulenzen zerschlagen und somit im fertigen Papier nicht mehr auffindbar ist. In der Peripherie der Papiermaschine (z.B. im Sprühbereich, aber außerhalb des Kreislaufs) sind diese Technologien jedoch wirkungslos und können die Bildung von Schleimen nicht verhindern.

Daher werden so genannte Biozid-Methoden in der Papierindustrie bevorzugt. Hierbei unterscheidet man wiederum zwischen so genannten organischen Bioziden und oxidativen Verfahren.

Bei den organischen Bioziden handelt es sich um Gifte, die nach einem bestimmten Dosierungsplan in den Kreislauf gegeben werden und die Bakterien abtöten. In der Regel sind diese Biozide nicht oxidativ.

Diese Gifte haben jedoch den Nachteil, dass sie aus kosten- und sicherheitstechnischen Gründen nur in geringen Konzentrationen eingesetzt werden können und dürfen. Dies hat jedoch zur Folge, dass die Schleimbildung nicht vollständig verhindert werden kann.

Außerdem wurde beobachtet, dass durch diese sogenannten klassischen Biozide freischwimmende Bakterien aufgrund der fehlenden Schleimschutzhülle wesentlich besser abgetötet werden als Schleimbakterien, so dass letztere sich aufgrund eines verschobenen Gleichgewichts gegenüber dem Nährstoffangebot oft noch besser entwickeln können. Somit ist der Einsatz von klassischen Bioziden sogar in vielen Fällen kontraproduktiv.

Daher ist mittlerweile die bevorzugte Methode die so genannte Oxidationsmethode, d.h. die Keime werden durch oxidierende Substanzen abgetötet. Somit wird die Bildung von Biofilmen und Schleimagglomeraten verhindert. Bei diesen oxidierenden Substanzen kann es sich z.B. um Peroxyd, Ozon, Chlor, Brom und Verbindungen davon handeln. Oxidierende Verfahren haben den Vorteil, dass sie bei genügender Dosierung die Schleimschutzhülle von Schleimbakterien aufoxidieren können. So führt z.B. die Chlorierung von Wasser, das Ammoniak oder andere Amin-Derivate enthält, zur Bildung von Chloraminen. Diese Chloramine gelten im Vergleich zu Unterchloriger Säure oder Unterbromiger Säure als schwache Biozide.

Die Chlorierung von Wasser wird vor allem bei Frischwassersystemen verwendet. Diese Frischwassersysteme haben einen sogenannten niedrigen Chlorbedarf, da ihr Gehalt an organischen Substanzen relativ gering ist.

Bei Kreisläufen mit einem hohen Chlorbedarf, d.h., Kreisläufe die einen hohen Anteil an organischen Substanzen haben, wurde hingegen beobachtet, dass viele der organischen Substanzen zuerst mit dem Oxidationsmittel reagieren, so dass der durch die Chloraminierung erzeugte biozide Wirkstoff vollständig verbraucht wird und die eigentlich gewünschte Keimabtötung unterbleibt. Somit tritt die Verhinderung des Wachstums von Biofilmen nicht ein. Für solche Wässer bzw. Kreisläufe werden daher im Allgemeinen nicht oxidierbare Biozide empfohlen.

Unter dem Begriff "Chlorbedarf" versteht man die Chlormenge, die durch Substanzen, die sich im Wasser befinden, reduziert oder anderweitig in inerte Formen des Chlors umgewandelt werden. Hierzu wurden Standardverfahren zur Messung derselben entwickelt ("Standard methods for the determination of water and waste water", 16. Auflage, Methods, § 409, Seiten 316-319). Diese Verfahren beruhen auf der Zugabe einer spezifischen Dosis Chlor zu dem Medium und der Messung des nach der gegebenen Kontaktzeit verbleibenden Chlors. Zur Klasse der chlorverbrauchenden Substanzen gehören Ammoniak und Ammoniumderivate, Sulfide, Cyanide, oxidierbare Kationen, Pulplignine, Stärke, Zucker, Öle, Wasserbehandlungszusätze wie Kalk- und Korrosionsinhibitoren. Das Mikrobenwachstum im Wasser und im Biofilm trägt zu dem Chlorbedarf des Wassers und zu dem Chlorbedarf des zu behandelnden Systems bei.

Eine andere Methode um den Chlorbedarf zu bestimmen ist die Aufzeichnung der Redoxpotentialentwicklung nach der Zugabe eines Oxidationsmittels zu einer Probe oder in den tatsächlich zu behandelnden Kreislauf. Der Abbau des Chlors wird anhand des Trends des Redoxpotentials erfasst.

Da die Fracht an organischen Substanzen in Papierherstellungskreisläufen sehr hoch ist und somit diese Kreisläufe als Systeme mit hohem Chlorbedarf gelten, ist die Zugabe von einem reinen Oxidationsmittel wie oben dargelegt in der Regel bei Wasserkreisläufen in der Papierherstellung nicht zielführend.

Dem Abreagieren der aktiven oxidierenden Substanz mit der in den Kreisläufen vorhandenen Reaktanden kann man durch eine so genannte Stabilisierung entgegenwirken. Bei der Stabilisierung bindet man Chlor oder Brom an ein Trägermolekül und dieses Molekül wirkt dann keimabtötend als solches oder durch eine erneute Abspaltung des Chlors oder Broms. So können bereits Fertigprodukte wie z.B. Bromchlordimethylhydantoin (BCDMH), Dichlordimethylhydantoin (DCDMH) oder Mischungen aus beiden, sowie Bromlösungen u.s.w. erworben werden.

Eine andere Möglichkeit besteht darin, vor Ort aus der Reaktion zwischen zwei kostengünstigen Komponenten eine dritte stabilisierte bioaktive oxidierende Komponente zu bilden, welche dann dem Kreislauf zugegeben wird. Die so gebildeten Verbindungen sind in der Regel nicht so lange stabil wie die als Fertigprodukte eingesetzten stabilisierten Produkte und können daher reaktiver in den jeweiligen Kreisläufen wirken, müssen aber aus diesem Grund schnell in die zu behandelnden Systeme gelangen bevor sie sich zersetzen. In der Praxis wird entweder eine Kombination von Natriumhypochlorit (Natronbleichlauge) und Dimethylhydantoin (DMH) verwendet oder eine Kombination von Natriumhypochlorit und einem Ammoniumsalz, in der Regel Ammoniumbromid aber auch Ammoniumsulfat. Gerade die Verwendung von Natriumhypochlorit mit einem Ammoniumsalz wird in der Literatur häufig beschrieben, so z.B. in den Patentschriften EP 0517102 oder EP 0785908.

So wird in EP 0517102 die Ammoniumsalz-Komponente zunächst mit der Chlorvorläufer-Komponente, in diesem Falle handelt es sich um Ammoniumbromid und Natriumhypochlorit, gemischt. Diese Mischung wird dann zu dem behandelten System gegeben. Die Mischung aus beiden Komponenten hat bevor sie in das System gegeben wird eine Chlor-Endkonzentration von 0,01 bis 1%, das entspricht einem Chlor-Endgehalt von 100 bis 10 000 ppm. Wie in EP 0517102 dargelegt, erscheint es notwendig, beide Komponenten zunächst außerhalb des zu behandelnden Systems zu mischen und so den bioziden Wirkstoff vorab zu erzeugen. Entsprechende in situ Versuche im System, wie sie in EP 0517102 beschrieben werden, bestätigen dieses Konzept. Dort wird ausdrücklich betont, dass ein in situ Erzeugen des bioziden Wirkstoffes im zu behandelnden System nicht die gewünschte Wirkung zeigt.

In EP 0785908 wird zwar von einem so genannten in situ Erzeugen des bioziden Wirkstoffes in einer Rohrleitung gesprochen, und daher erscheint die Lehre aus EP 0785908 gegenläufig gegenüber der aus EP 0517102 zu sein, jedoch werden auch hier zunächst beide Komponenten vorab gemischt, bevor sie in das eigentlich zu behandelte System gelangen. Desweiteren verwendet EP 0785908 verdünnte Lösungen, d.h. es wird zunächst eine verdünnte Lösung des Chlorvorläufers und eine verdünnte Lösung des verwendeten Ammoniumhalogenids hergestellt. Die verdünnte Lösung des Chlorvorläufers hat eine Konzentration von 0,1 bis 2,0% ausgedrückt als Cl₂ und die des Ammoniumhalogenids von 0,1 bis 6,0%. Beide verdünnte Lösungen werden dann kontinuierlich und gleichzeitig in eine Rohrleitung gegeben, dort vermischt und anschließend wird die Mischung dem behandelten System zugeführt. Somit wird auch in EP 0785908 das allgemeine Prinzip von EP 0517102 verwirklicht.

Nachteil beider Verfahren ist jedoch, dass aufgrund der grundsätzlichen Inkompatibilität der beiden Komponenten (z.B. Natriumhypochlorit und Ammoniumbromid) und der damit verbundenen Dosierungstechnik ein erhebliches Gefahrenpotential besteht, da, zumindest bei der aktuell gebräuchlichen Anwendungstechnik, die Dosiercontainer der beiden Substanzen in unmittelbarer räumlicher Nähe zueinander gelagert werden müssen.

US-B1-6 303 038 betrifft ein Verfahren zur Desinfektion unter Verwendung von Dialkylhydantoin bevorzugt als Feststoff in Systemen mit niedrigem Chlorbedarf wie Schwimmbädern.

US-A1-2003/121868 betrifft Verfahren um die Bildung von Biofilm zu verhindern, wobei als Biozid eine Mischung zum Einsatz kommt, welche vorab aus einer Ammoniumsalzkomponente und einer Hypochloritkomponente in einer Vormischkammer in Abwesenheit weiterer Verbindungen erzeugt wird.

Aufgabe der vorliegenden Erfindung war es daher, unter Beachtung der Nachteile des Standes der Technik eine Technologie zur Verfügung zu stellen, welche die Bildung einer biozidwirkenden Substanz in situ erlaubt und somit den bioziden Wirkstoff unmittelbar im System zu erzeugen und zur Verfügung zu stellen, ohne dass hierfür eine hochkomplizierte und störanfällige Misch- und Reaktionstechnologie wie sie z.B. in EP 0785908 beschrieben notwendig ist.

Ein weiteres Ziel der nachfolgend beschriebenen Erfindung war es, aufgrund der in Patent EP 0785908 beschriebenen Anwendungstechnik notwendige Nähe zwischen den zwei Komponenten z.B. Natriumhypochlorit und Ammoniumbromid oder anderen Ammoniumsalzen überflüssig zu machen, so dass dadurch das erhebliche Risiko einer explosionsartigen massiven Giftgasbildung durch Direktkontakt der beiden Produkte in großen Mengen vermieden wird.

Diese Aufgabe wird gelöst durch ein Verfahren zur Verhinderung des Wachstums von lebenden Organismen in Süßwasserkreislauf-Systemen gemäß Anspruch 1

Überraschenderweise wurde gefunden, dass auch bei Süßwasserkreislauf-Systemen, die einen hohen Chlorbedarf haben, es möglich ist den bioziden Wirkstoff in situ im zu behandelnden System zu erzeugen ohne dabei die biozide Wirkung einzubüßen.

Im erfindungsgemäßen Verfahren gemäß Anspruch 1 wird dabei zunächst eine Ammoniumsalz-Komponente in einer Konzentration von mindestens 15 Gew.% in das zu behandelnde System vorgelegt und erst danach ein Chlorvorläufer als Oxidationsmittel in das zu behandelnde System gegeben, wobei der Chlor-Endgehalt im zu behandelnden System nicht 10 ppm übersteigt.

Dabei ist bevorzugt, dass die Ammoniumsalz-Komponente in einer Konzentration von mindestens 25 Gew.% eingesetzt wird, besonders bevorzugt ist eine Konzentration von mindestens 30 Gew.% und insbesondere bevorzugt ist eine Konzentration von 35 Gew.%.

Desweiteren ist bevorzugt, dass der Chlor-Endgehalt im zu behandelten System nicht 8 ppm übersteigt. Besonders bevorzugt ist es, dass der Chlor-Endgehalt nicht 5 ppm, insbesondere nicht 3 ppm übersteigt.

Unter einem hohen Chlorbedarf versteht man in der vorliegenden Erfindung, einen Chlorbedarf von mindestens 1,8 ppm pro 60 Minuten. Das erfindungsgemäße Verfahren ist besonders für einen Chlorbedarf von mindestens 2,00 ppm pro 60 Minuten geeignet. Dieser wird nach den Methoden, wie sie in "Standard methods for the determination of water and waste water", 16. Auflage, Methods, § 409, Seiten 316-319, beschreiben ist, ermittelt.

Der Chlorvorläufer selber sollte in einer Konzentration von mindestens 8 Gew.% in das System gegeben werden, bevorzugt ist eine Konzentration von 13 Gew.% oder mehr, besonders bevorzugt ist eine Konzentration von 15 Gew.%.

Im zu behandelnden System reagieren dann die Ammoniumsalz-Komponente und der verwendete Chlorvorläufer zu Monochloramin. Unerwünscht ist die Bildung von leicht flüchtigem Di- und Trichloramin, welche durch Geruch und Hautreizung sofort feststellbar sind. Die Zielsubstanz Monochloramin ist schwer flüchtig. Hierbei ist anzumerken, dass die im Stand der Technik beschriebene Flüchtigkeit von Monochloraminen in Kühlturmwässern, welche in der Regel einen sehr geringen Chlorbedarf aufweisen, durchaus gegeben ist. So untersuchten McCoy, W.F., S.A. Borchardt and M.R. Hermiller die Flüchtigkeit von verschiedenen Bioziden in Kühltürmen. Aus ihrer Studie "Traced biocides: a new technology for industrial water treatment, Paper presented at the 1995 Cooling Tower Institute Annual Meeting, Fort Worth (Texas (USA), 1995)" ergab sich die folgende Reihenfolge der Flüchtigkeit verschiedener Oxidationsmittel: Ozon> Chlordioxid > Chloramin > hypochlorige Säure > Hypobromsäure, wobei Ozon rund 167.000-mal flüchtiger ist als Hypobromsäure bei 20°C. Wie sich jedoch zeigte ist diese Flüchtigkeit in Kreislaufsystemen eher gering und macht somit keine Probleme.

In dem erfindungsgemäßen Verfahren werden also beide Komponenten nicht verdünnt bevor sie in das zu behandelnde System gelangen. Die Zugabe der Komponenten zum System erfolgt schockartig, d.h., ihre Zugabe zum behandelnden System erfolgt in einem kurzen Zeitintervall in konzentrierter Form. Die Länge der schockartigen Zugabe ist von vielen Parametern abhängig und wird individuell festgelegt. Sie kann zwischen 0,5 und 60 Minuten betragen. Vorzugsweise beträgt sie jedoch 0,5 bis 15 Minuten, besonders bevorzugt 0,5 bis 10 Minuten und insbesondere bevorzugt ist ein Zeitintervall von 0,5 bis 5 Minuten.

Gibt man nach dem die Ammoniumsalz-Komponente vorgelegt wurde die Chlorvorläufer-Komponente zum System, so ist durch die schockartige Zugabe ein sofortiger Anstieg des Redoxpotentials im zu behandelnden System zu beobachten.

Das Molverhältnis zwischen der Ammoniumsalz-Komponente zur Chlorvorläufer-Komponente sollte in der vorliegenden Erfindung 1 oder kleiner sein.

Bei Zugabe der Komponenten zum System sollte der pH-Wert im Wasserkreislauf zwischen 5 bis 12,5 liegen, bevorzugt ist ein pH-Wert zwischen 7,0 bis 9,0.

Als Ammoniumsalz-Komponente können alle im Stand der Technik bekannten Ammoniumsalz-Komponenten verwendet werden, bevorzugt ist jedoch die Verwendung von Ammoniumbromid, Ammoniumchlorid, Ammoniumsulfat oder Ammoniumphosphat. Besonders bevorzugt ist dabei die Verwendung von Ammoniumbromid

Als Chlorvorläufer können ebenfalls alle bekannten Chlorvorläufer verwendet werden, bevorzugt ist aber die Verwendung von Natriumhypochlorit (NaOCl).

Das erfindungsgemäße Verfahren wird vor allem, aber nicht nur, bei der Papierherstellung eingesetzt. So ist es aber auch denkbar das Verfahren z.B. in Kreisläufen für Kühltürme, der Lebensmittelindustrie etc. zum Einsatz kommt, sofern diese Kreisläufe einen hohen Chlorbedarf aufweisen.

In der Papierherstellung sind mehrere Süßwasser-Kreisläufe von Nöten, die meisten weisen einen hohen Chlorbedarf auf und in allen kann das erfindungsgemäße Verfahren angewendet werden. Insbesondere bei den notwendigen Siebwasserkreisläufen ist die Bildung von Schleim ein erhebliches Problem. Man unterscheidet hierbei zwischen einem sogenannten engen Siebwasserkreislauf (Siebwasser I) und einem weiten Siebwasserkreislauf (Siebwasser II). Das erfindungsgemäße Verfahren ist für beide Kreisläufe geeignet.

Nach dem erfindungsgemäßen Verfahren wird zunächst die konzentrierte Ammoniumsalz-Lösung mittels einer Dosierpumpe in das zu behandelnde System, in diesem Fall in den Siebwasserturm oder in eine Rohrleitung, in dem sich z.B. das Siebwasser befindet, gegeben. Dieser Turm bzw. das Rohr ist ein kontinuierlich durchflossener Behälter.

Die Zugabe erfolgt gemäß dem erfindungsgemäßen Verfahren schockartig und es wird anschließend umgewälzt.

Nach einem Umwälzschritt wird die Dosierpumpe für die Zugabe des Chlorvorläufers eingeschaltet und es erfolgt die Zugabe des Chlorvorläufers. Der dafür notwendige Dosiercontainer befindet sich üblicherweise zwischen 10 und 80 m, bevorzugt zwischen 50 und 70 m entfernt von dem Dosiercontainer der Ammoniumsalz-Komponente.

Auch die Zugabe der Chlorvorläufer-Komponente erfolgt schockartig, was sich in einem unmittelbaren Anstieg des Redoxpotentials im System bemerkbar macht.

Diese Vorgehensweise sollte nach einiger Zeit wiederholt werden, um das Wachstum von lebenden Organismen im System sicher zu verhindern. In Papiermaschinen geschieht dies vorzugsweise alle 20 bis 60 min, besonders bevorzugt alle 25 bis 35 Minuten.

Dadurch dass beide Komponenten direkt zu dem behandelnden System gegeben werden, erfolgt die Erzeugung des bioziden Wirkstoffes in situ im zu behandelten System. Dies führt jedoch nicht wie im Stand der Technik dargelegt zu einer schwächeren bioziden Wirkung, wie die unten beschriebenen Versuche zeigen.

Des Weiteren erlaubt das erfindungsgemäße Verfahren eine wesentlich einfacherer Dosiertechnik, da, pro Dosierort, nur 2 Dosierpumpen verwendet werden müssen. Außerdem können beide Dosiercontainer in unterschiedlichen Räumen gelagert werden, was die Gefahr einer Havarie nahezu ausschließt.

In den folgenden Figuren und Beispielen wird das Prinzip des erfindungsgemäßen Verfahrens noch einmal verdeutlicht.

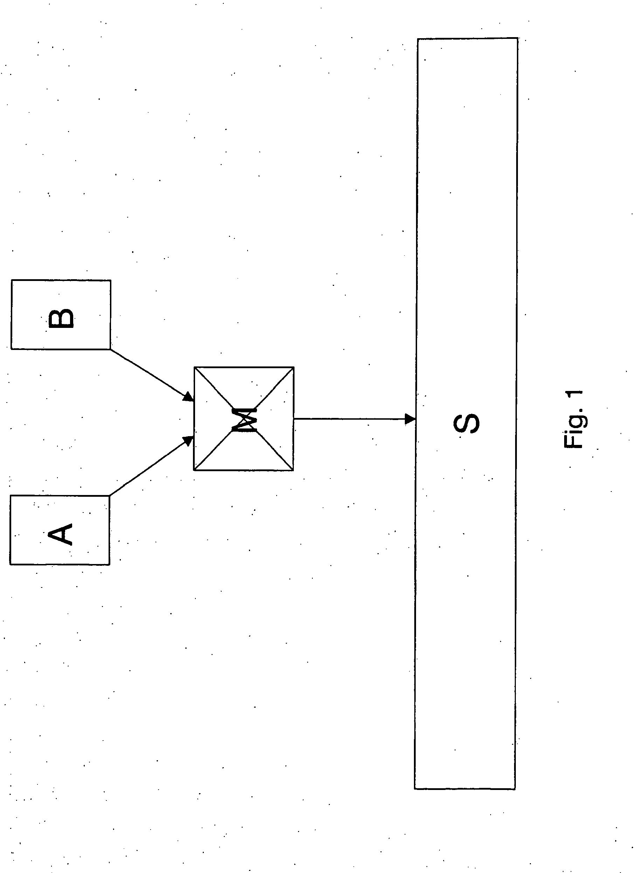

Figur 1 zeigt schematisch die Dosiereinheit, wie sie aus dem Stand der Technik bekannt ist. Dabei soll A den Dosiercontainer für die Ammoniumsalz-Komponente symbolisieren, B den Dosiercontainer für den Chlorvorläufer, M ist die Mischeinheit in der beide Komponenten mit einander gemischt werden und S stellt das zu behandelnde System dar.
Figur 2 zeigt schematisch an welchen Stellen des zu behandelten Systems (S), die beiden Komponenten (A und B) gemäß der Erfindung in das System gelangen.
Figur 3 zeigt die gemessene Redoxpotential-Kurve nach dem nur NaOCl zum System hinzugegeben wurde (siehe Beispiel 2a).
Figur 4 zeigt die gemessene Redoxpotential-Kurve nach dem das erfindungsgemäße Verfahren durchgeführt wurde (siehe Beispiel 2b).

### Beispiele

### Beispiel 1

Eine Papiermaschine zur Herstellung von Werkdruckpapieren wurde zuvor mit einem klassischen oxidierenden System bestehend aus der in-situ-Kombination von NaOCl und Dimethylhydation (DMH) behandelt.

Anschließend wurde dieses System umgestellt auf das erfindungsgemäße Verfahren und zwar so, dass zunächst NH₄Br in das so genannte Siebwasser I der Papiermaschine vorgelegt wurde und räumlich ca. 10 m davon entfernt NaOCl als zweite Komponente dazu dosiert wurde.

Zur Überprüfung des oxidativen Effektes wurde die Papiermaschine mit einer Online-Messung des Redoxpotentials im so genannten Dünnstoff ausgestattet. Zusätzlich wurden Keimzahlen, Gesamt- und Freichlorwerte gemessen.

In diesem Zusammenhang ist insbesondere zu bemerken, dass bei der verwendeten Papiermaschine mittels Leimpresse amphotere Stärke aufgebracht wurde. Desweiteren wurde im beschrieben Verfahren sehr saugfähiges Basispapier hergestellt. Dies hatte zur Folge, dass sehr viel der verwendeten Stärke in das Papier eindringen konnte. Dies führte zu hohen Stärkeanteilen in den Systemwässern, bei der Wiederverwendung des so genannten Ausschuss aus der Produktion. Dies förderte zum einen das bakterielle Wachstum durch eine optimale Nährstoffquelle und zum anderen stellte die Stärke auch eine oxidierbare Substanz dar, welche potentiell Chlor abbaut. Somit handelt es sich in diesem Beispiel um ein System mit hohem Chlorbedarf.

Wie ein Vorversuch mit der alleinigen Schockdosierung von NaOCl in das Siebwasser I zeigte, führte diese alleinige Schockdosierung ohne vorherige Vorlage der Ammoniumhalogenid-Komponente zu keinerlei merklichen Erhöhung des Redoxpotentials (+120 mV) im Dünnstoff (Online-Messung). Mittels Punktmessungen konnten weder Frei- noch Gesamtchlor nachgewiesen werden.

Gemäß der erfindungsgemäßen Verfahrens wurde zunächst eine 35 Gew.% ige NH₄Br vorgelegt und 13 Gew.% %ige NaOCl in einem räumlichen Abstand von ca. 10 m in unterschiedlichen Volumenverhältnissen NH₄Br zu NOCl (0:1 bis 3:1) nachdosiert. Das Redoxpotential erhöhte sich schlagartig auf einen Wert von ca. 350 mV und auch die Chlormessung ergab am Ende des Dosierschocks einen Wert von 0,1 ppm für Freichlor und 3 ppm für das Gesamtchlor. Auch die Keimzahlmessungen der Proben, welche unmittelbar nach Schock genommen wurden, sanken von 1.10⁵ cfu auf 0 cfu.

### Beispiel 2

Auf einer Papiermaschine für die Kartonherstellung wurden verschiedene Papierlagen hergestellt, welche nach und nach miteinander verbunden (vergautscht) wurden, sodass ein Mehrlagenkarton entstand. Bei den einzelnen Lagen handelt es sich um die Decke, die Schonschicht, die Einlage und den Rücken.

Alle haben eigene Kreisläufe und sind mit einem klassischen Biozidsystem behandelt worden.

Bei diesem System ist zu beachten, dass insbesondere die Situation an der Decke schwierig ist. Hier können manchmal innerhalb von 24 Stunden Schleime entstehen, welche ein Anhalten der Kartonmaschine und eine Reinigung des Stoffauflaufs notwendig machen. In der Decke wird, sowie in den anderen Lagen, hauptsächlich Altpapier eingesetzt. Hierdurch ist die CSB-Belastung dieser Wässer natürlich extrem und somit ist auch der Chlorbedarf dementsprechend hoch.

Im Gegensatz zum ersten Beispiel wurden hier Laborversuche durchgeführt, um die Wirkung der einzelnen Komponenten vorzutesten.

### Beispiel 2a

Zunächst wurde der Chlorbedarf anhand der Redoxpotentiale festgehalten:

Die Keimzahl im Siebwasser I lag bei 1x10⁷ Keime/ml. Dies zeigte, dass die Biozidbehandlung nach herkömmlichem Verfahren ohne jeden Effekt war.

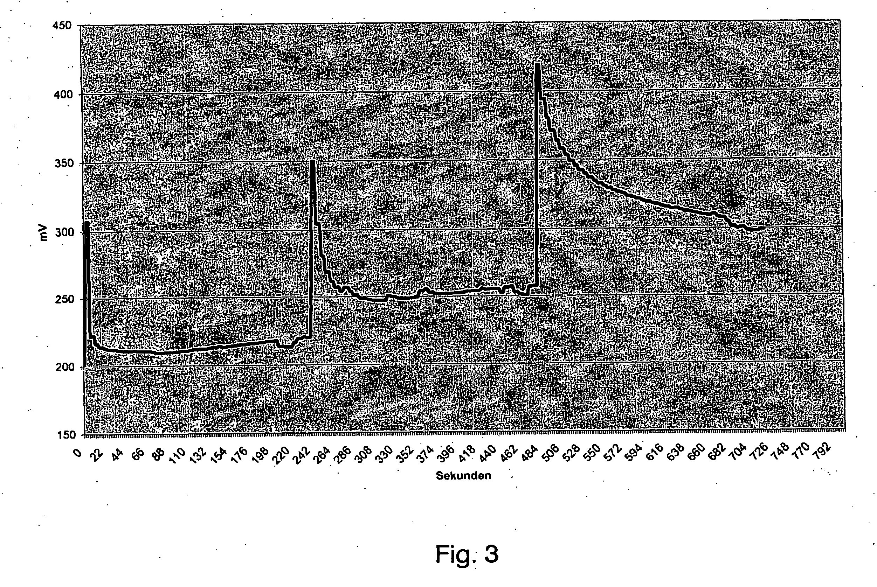

Im Folgenden wurden dreimal 44 µl einer 13 Gew.% NaOCl-Lösung, dies entspricht einer Chlormenge von 7 ppm, in das System gegeben und anschließend wurden sowohl das Redoxpotential als auch die Keimzahl bestimmt (siehe Tabelle I und Figur 3).

Bei allen drei Zugaben wurde zunächst ein schockartiger Anstieg des Redoxpotentials beobachtet, der aber schnell abfiel (siehe Figur 3).

**Tabelle I**

| | Beginn | 1. Zugabe | 2. Zugab | 3. Zugabe |
|---|---|---|---|---|
| Redoxpotential | 200 mV | | | |
| Redoxpotential nach dem Abfall | | 200 mV | 250 mV | 300 mV |
| Keimzahl | 1X10⁷ Keime/ | 1x10⁷ Keime/ml | 1x10⁶ Keime/ml | 1x10³ Keime/ml |

Wie der Tabelle I zu entnehmen ist, konnte erst bei der dritten Zugabe von NaOCl eine signifikante Reduzierung der Keimzahl beobachtet werden. Somit ist die alleinige Zugabe von NaOCl nicht zielführend.

### Beispiel 2b

Im Folgenden wurde dann gemäß der Erfindung zunächst NH₄Br in das System vorgelegt.

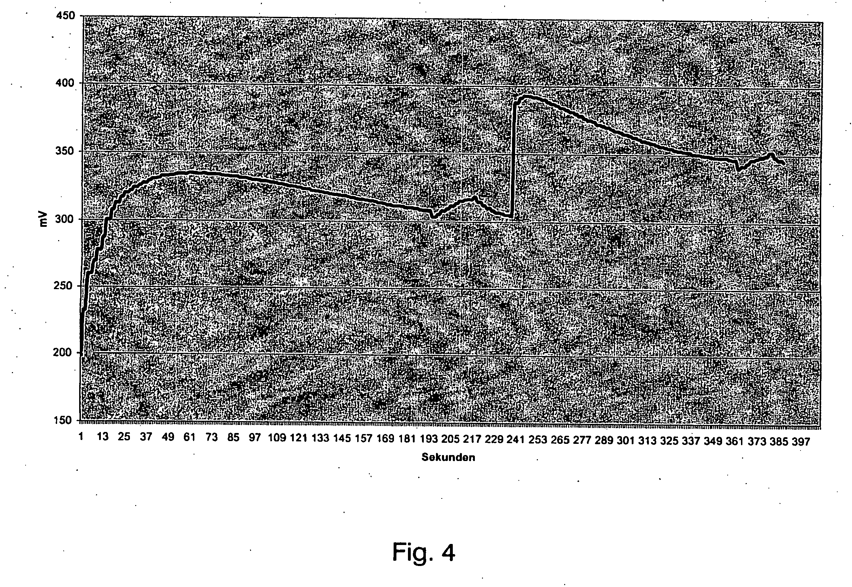

Dabei war zu beobachten, dass die Zugabe von 44 µl einer 35 Gew.% igen NH₄Br -Lösung alleine keinen Einfluss auf das initiale Redoxpotential hatte (in Figur 4 nicht gezeigt).

Erst die Zugabe von 44 µl einer 13 Gew.% igen NaOCl führte unmittelbar zu einem Anstieg und einer Stabilisierung des Redoxpotentials auf ca. 340 mV, also zu einem Anstieg um ca. 140 mV (siehe Figur 4)

Der Effekt auf die Keimzahl ist dabei signifikant. Es kam zu einer Reduzierung der Keimzahl von 1 x10⁷ auf 1 x10³ Keime/ml.

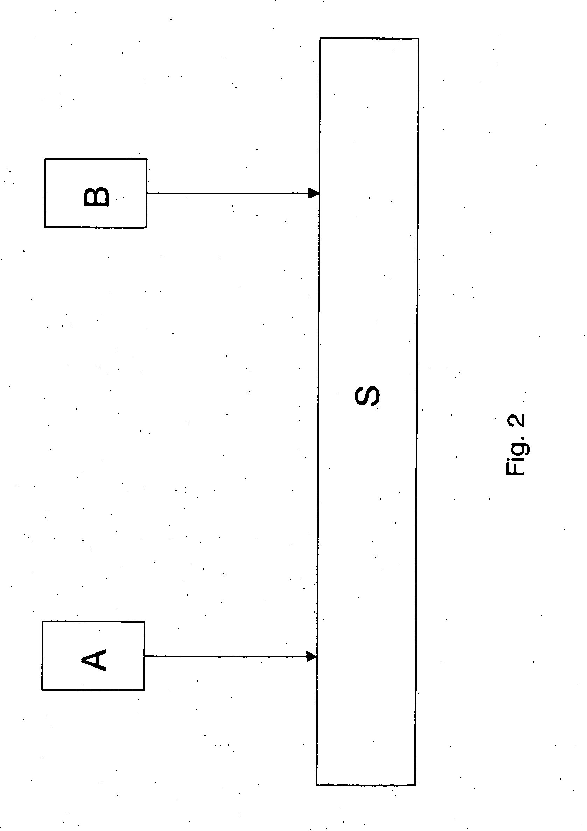

Die weitere Zugabe von NaOCl führte zu einer Erhöhung des Redoxpotentials auf knapp 400 mV (siehe Figur 2). Durch die Mehrdosierung wurde die Keimzahl nur geringfügig weiter verringert, da kein NH₄Br mehr zur Reaktion zur Verfügung stand.

### Beispiel 3

Unter Bezugnahme auf den obigen Laborversuch (Beispiel 2) wurde dann das erfindungsgemäße Verfahren im industriellen Maßstab durchgeführt. Hierbei wurde zunächst NH₄Br vorgelegt und anschließend NaOCl nachdosiert. Aufgrund der einfachen Anwendungstechnik konnten die beiden Substanzen in einem räumlichen Abstand von ca. 70 m zueinander in unterschiedlichen Räumen gelagert werden.

Im Kreislauf-System konnten zunächst hohe Redoxpotentiale (> 300 mV) aufgebaut werden. Hierdurch ergaben sich Keimzahlen von "0" und absolut schleimfreie Oberflächen.

In der Folge wurde dann Aluminiumsulfat als Fixiermittel herausgenommen und durch ein aminhaltiges kationisches Hilfsmittel ersetzt. Dadurch fiel das Redoxpotential über mehrere Tage deutlich ab und schließlich konnten keine Redoxschocks mehr festgestellt werden.

Dies lag daran, dass der aminhaltige Trockenverfestiger mit Harzleim zu einer Koazervatbildung führte und dieses Koazervat in Konkurrenz zu NH₄Br aufgetreten ist und demzufolge freies Chlor und freies Brom von ihm absorbiert wurde. Obwohl die Keimzahlen über mehrere Tage wieder bei 1.10⁶ cfu lagen, blieben alle Oberflächen im kurzen Kreislauf der Maschine absolut schleimfrei.

Nachdem wieder Aluminiumsulfat eingesetzt wurde, stiegen auch die Redoxpotentiale wieder (Freichlor bzw. Freibrom), wobei die Keimzahlen wieder auf "0" reduziert wurden (unmittelbar nach der Schockdosierung)

Somit belegen die Versuche eindeutig, dass eine Vormischung der beiden Komponenten auch bei hochbelasteten Kreislaufwässern nicht notwendig ist, um eine genügende Wirkung in Bezug auf Schleimverhinderung zu erzielen.

## Patentansprüche

1. Verfahren zur Verhinderung des Wachstums von lebenden Organismen in Süsswasserkreislauf-Systemen mit Chlorbedarf von mindestens 1,8 ppm Cl₂ pro 60 Minuten, wobei der Biozide Wirkstoff in situ im zu behandelnden System erzeugt wird, und wobei zunächst eine Ammoniumsalzlösung in einer Konzentration von mindestens 15 Gew.% mittels einer Dosierpumpe in das zu behandelnde System vorgelegt wird, anschließend umgewälzt wird, und erst danach ein Chlorvorläufer als Oxidationsmittel in das zu behandelnde System gegeben wird, wobei der Chlor-Endgehalt im zu behandelnden System 10 ppm nicht übersteigt, und die Komponenten schockartig dem System zugeführt werden.

2. Verfahren nach Anspruch 1, wobei die Ammoniumsalzlösung in einer Rohrleitung oder einem Kessel vorgelegt wird.

3. Verfahren nach einem der Ansprüche 1 oder 2 **dadurch gekennzeichnet, dass** der Chlorvorläufer zum System in einer Konzentration von mindestens 8 Gew.-% zugegeben wird.

4. Verfahren nach einem der oben genannten Ansprüche **dadurch gekennzeichnet, dass** das Zugabemolverhältnis N/Cl in den zu behandelnden Kreislauf 1 oder kleiner ist.

5. Verfahren nach einem der dem gennanten Ansprüche, wobei der Chlorvorläufer Natrium hypochlorit ist.

6. Verfahren nach einem der oben genannten Ansprüche **dadurch gekennzeichnet, dass** das Ammoniumsalz ein Ammoniumbromid, ein Ammoniumchlorid, eine Ammoniumsulfat oder ein Ammoniumphosphat ist.

7. Verfahren nach einem der oben genannten Ansprüche **dadurch gekennzeichnet, dass** es sich bei dem Süßwasserkreislauf-System um eine 35 Papiermaschine handelt.

8. Verfahren nach einem der oben genannten Ansprüche **dadurch gekennzeichnet, dass** die Ammoniumsalz-Komponente in einen Siebwasser-Kreislauf vorgelegt wird.

## Claims

1. A method for preventing the growth of living organisms in freshwater circuit systems having a chlorine demand of at least 1.8 ppm of Cl₂ per 60 minutes, wherein the biocidal active substance is produced in situ in the system to be treated, and wherein an ammonium salt solution is first charged to the system to be treated by means of a dosing pump in a concentration of at least 15 wt%, is subsequently circulated, and a chlorine precursor is only thereafter added as an oxidant to the system to be treated, wherein the final chlorine content in the system to be treated does not exceed 10 ppm, and the components are fed to the system in shock-like fashion.

2. The method according to claim 1, wherein the ammonium salt solution is charged in a conduit or a tank.

3. The method according to either of claims 1 to 2, **characterized in that** the chlorine precursor is fed to the system in a concentration of at least 8 wt%.

4. The method according to any of the above-mentioned claims, **characterized in that** the molar ratio of addition N/Cl to the circuit to be treated is 1 or less.

5. The method according to any of the above-mentioned claims, wherein the chlorine precursor is sodium hypochlorite.

6. The method according to any of the above-mentioned claims, **characterized in that** the ammonium salt is an ammonium bromide, an ammonium chloride, an ammonium sulfate or an ammonium phosphate.

7. The method according to any of the above-mentioned claims, **characterized in that** the freshwater circuit system involves a paper machine.

8. The method according to any of the above-mentioned claims, **characterized in that** the ammonium salt component is charged to a white water circuit.

## Revendications

1. Procédé pour empêcher le développement d'organismes vivants dans des systèmes de circuits d'eau douce avec un besoin en chlore d'au moins 1,8 ppm de Cl₂ par 60 minutes, dans lequel la substance active biocide est produite in situ dans le système à traiter et dans lequel une solution de sel d'ammonium en concentration d'au moins 15 % en poids est, d'abord, disposée dans le système à traiter moyennant une pompe de dosage, ensuite brassée et où l'on ajoute seulement après un précurseur de chlore comme agent oxydant au système à traiter, dans lequel la teneur finale en chlore dans le système à traiter ne dépasse pas 10 ppm et les composants sont introduits brusquement dans le système.

2. Procédé selon la revendication 1, dans lequel la solution de sel d'ammonium est disposée dans une conduite de tuyau ou une cuve.

3. Procédé selon l'une quelconque des revendications 1 ou 2, **caractérisé en ce que** le précurseur de chlore est ajouté au système dans une concentration d'au moins 8 % en poids.

4. Procédé selon l'une quelconque des revendications précitées, **caractérisé en ce que** le rapport molaire d'ajout N/Cl dans le circuit à traiter est de 1 ou inférieur.

5. Procédé selon l'une quelconque des revendications précitées, dans lequel le précurseur de chlore est l'hypochlorite de sodium.

6. Procédé selon l'une quelconque des revendications précitées, **caractérisé en ce que** le sel d'ammonium est un bromure d'ammonium, un chlorure d'ammonium, un sulfate d'ammonium ou un phosphate d'ammonium.

7. Procédé selon l'une quelconque des revendications précitées, **caractérisé en ce que** le système de circuit d'eau douce est une machine à papier.

8. Procédé selon l'une quelconque des revendications précitées, **caractérisé en ce que** le composant de sel d'ammonium est disposé dans un circuit d'eau blanche.
